# EUROPÄISCHE PATENTSCHRIFT

(11) **EP 0 321 774 B1**
(45) Veröffentlichungstag und Bekanntmachung des Hinweises auf die Patenterteilung: **02.03.1994**
(21) Anmeldenummer: 88120329.3
(22) Anmeldetag: 06.12.1988
(51) Int. Cl.: F16K 3/26, F16K 3/24, F16K 3/34, F01L 13/06, F02D 9/06

(54) **Schiebeventil mit Mengenregulierung**
Sliding valve with volume adjustment
Vanne à tiroir avec régulation de quantité

(30) Priorität: 22.12.1987 DE 3743569
(43) Veröffentlichungstag der Anmeldung: 28.06.1989
(73) Patentinhaber: Schmidt, Alfred, D-91278 Pottenstein (DE)
(72) Erfinder: Schmidt, Alfred, D-91278 Pottenstein (DE)
(74) Vertreter: Böhme, Volker, Dipl.-Ing.

(56) Entgegenhaltungen:
- DE-A- 1 650 415
- DE-A- 3 533 393
- DE-B- 2 324 187
- GB-A- 403 152
- GB-A- 2 046 407
- US-A- 3 955 591

## Beschreibung

Die Erfindung betrifft ein Schiebeventil mit Mengenregulierung für ein Fluidum, bei dem ein Kolbenschieber in einer Gehäusekammer eines Ventilgehäuses axial hin- und herverschiebbar ist und aus dem Ventilgehäuse mit einem Betätigungsendstück herausragt, bei dem im Ventilgehäuse ein mit einem ersten Anschluß in Verbindung stehender Gehäuse-Kanal mit dem Kolbenschieber zugewandter Durchlaßöffnung vorgesehen ist, bei dem im Kolbenschieber ein mit einem zweiten Anschluß in Verbindung stehender Schieber-Kanal mit dem Ventilgehäuse zugewandter Durchlaßöffnung vorgesehen ist, wobei das Fluidum durch den einen Kanal den Durchlaßöffnungen zuführbar und den durch den anderen Kanal von den Durchlaßöffnungen abführbar ist, und bei dem beiderseits der zufuhrseitigen Durchlaßöffnung jeweils ein umlaufendes Dichtungsmittel vorgesehen ist.

Bei einem bekannten (DE-B-23 24 187) Schiebeventil dieser Art erstreckt sich eine von einer Vielzahl von Löchern gebildete abfuhrseitige Durchlaßöffnung nur über den von den Löchern gebildeten abführenden Kanal. Die durch Verschieben des Kolbenschiebers durchzuführende Mengenregulierung erfolgt also nur dadurch, daß die zufuhrseitige und die abfuhrseitige Durchlaßöffnung mehr oder weniger weit zur Deckung gebracht werden, wobei das Fluidum nach Durchtritt durch den Deckungsbereich der beiden Durchlaßöffnungen ungehindert abströmen kann. Diese Mengenregulierung ist für bestimmte Anwendungsfälle unter Berücksichtigung einer brauchbaren Hubbewegung des Kolbenschiebers zu wenig feinfühlig. Eine Verbesserung der Feinfühligkeit durch Verkleinerung des Lochquerschnittes bringt die Gefahr mit sich, daß enge Löcher von Verunreinigungen des Fluidums verstopft werden.

Eine Aufgabe der Erfindung ist es also, ein Schiebeventil der eingangs genannten Art, bei dem Verstopfungen des Durchlasses aufgrund von Fluidumverunreinigungen nicht auftreten, derart zu schaffen, daß die Mengenregulierung feinfühliger durchführbar ist. Das erfindungsgemäße Schiebeventil weist, diese Aufgabe lösend, die kennzeichnenenden Merkmale des Patentanspruchs 1 auf.

Bei dem erfindungsgemäßen Schiebeventil wird für die Mengenregulierung nicht nur der Überlappungsbereich der beiden Durchlaßöffnungen verstellt, sondern durch Verschieben des Kolbenschiebers auch der Querschnitt geändert, den das Fluidum nach Durchtritt durch den überlappungsbereich zum Abströmen findet. Der Querschnitt, den das Fluidum nach Durchtritt durch den Durchlaßöffnungen-überlappungsbereich bei Überlappung aufgrund der Aussparung zum Abströmen findet, ist kleiner als der Querschnitt des abfuhrseitigen Kanals und wird beim Öffnen von null auf einen größer werdenden Wert verändert. Da kein konstant kleiner Querschnitt, wie bei engen Löchern, vorliegt, können sich Verunreinigungen nicht in der Aussparung halten. Solange sich der Überlappungsbereich der beiden Durchlaßöffnungen im Bereich der Aussparung befindet, liegt eine wesentliche Verbesserung der Feinfühligkeit der Mengenregulierung vor. Die Randkanten der Aussparung beeinträchtigen die Dichtung, an der diese Randkanten entlanggleiten, wenn der Kolbenschieber zwischen Sperrstellung und Offenstellung hin- und herbewegt wird, nicht oder nur vernachlässigbar wenig.

Bei dem erfindungsgemäßen Schiebeventil ist vorgesehen, daß bei einer Kolbenschieber-Sperrstellung für den Durchtritt zwischen den beiden Anschlüssen der eine der beiden Anschlüsse über eine Ausnehmung des Kolbenschiebers mit einem Ablaß in Verbindung steht. Es handelt sich um ein Zwei-Wege-Ventil, das z.B. den Anschluß, über den das Fluidum zuströmt, mit dem Ablaß verbindet, oder zumeist den Anschluß, über den das Fluidum abgeströmt ist, mit dem Ablaß verbindet. Diese Gestaltung ist beim Steuern der Stellung von Bauteilen sinnvoll, die sich aufgrund einer dritten Kraft, z.B. einer mechanischen Feder, gegen die Kraft des Fluidums zurückbewegen.

Es ist möglich, die abfuhrseitige Durchlaßöffnung und die Aussparung im Ventilgehäuse vorzusehen. Besonders zweckmäßig und vorteilhaft ist es jedoch, wenn die dem abfuhrseitigen Kanal zugeordnete Aussparung am Kolbenschieber vorgesehen ist, weil dies die Herstellung der Aussparung erleichtert.

Wenn die abfuhrseitige Durchlaßöffnung von einem um die Ventil-Mittelachse umlaufenden Ring von Löchern gebildet ist, so läßt sich als Aussparung eine umlaufende Nut vorsehen, deren radiale Tiefe sich von den Löchern weg in Achsrichtung vermindert, wobei eine relativ große Menge von Fluidum durchtreten kann. Besonders zweckmäßig und vorteilhaft ist es jedoch, wenn der abfuhrseitige Kanal ein einheitliches Höhlungsgebilde ist und ebenso wie die Aussparung auf einen Teil eines Umfanges um die Ventil-Mittelachse beschränkt ist. Hierbei ist auch der bei sich überlappenden Durchlaßöffnungen maximale Durchtrittsquerschnitt klein gehalten.

Besonders zweckmäßig und vorteilhaft ist es sodann, wenn der abfuhrseitige Kanal eine Bohrung umfaßt und wenn die umfangsmäßige Breite der Aussparung gleich der oder kleiner als die umfangsmäßige Breite der Bohrung ist. Diese Gestaltung der Aussparung verbessert die Feinfühligkeit der Mengenregulierung und ist in der Regel vorgesehen, wenn nur eine abfuhrseitige Kanal-Bohrung vorhanden ist.

Die der abfuhrseitigen Kanal-Bohrung zugeordnete Aussparung ist z.B. ein Schlitz, dessen Breite sich in Achsrichtung und in radialer Richtung nicht ändert. Besonders zweckmäßig und vorteilhaft ist es jedoch, wenn der Grund der Aussparung plan ist, zur Ventil-Mittelachse schräg angeordnet ist und sich in axialer Richtung in der Breite verjüngt. Eine solche Aussparung läßt sich vereinfacht herstellen, vornehmlich dann, wenn die Aussparung an der Mantelfläche des Kolbenschiebers vorgesehen ist. Da sich diese Aussparung sowohl in der umfangsmäßigen Breite als auch in der radialen Tiefe ändert, ist die Feinfühligkeit der Mengenregulierung weiter verbessert. Auch ist die Herstellung der Aussparung vereinfacht. Die Aussparung ist gerade angeschliffen und nicht gekehlt. Sie ist in der Regel in axialer Richtung mehr als doppelt so lang, als sie in Umfangsrichtung breit ist.

Besonders zweckmäßig und vorteilhaft ist es dabei, wenn die Aussparung mit dem Grund unter einem Winkel von 1° bis 2° zur Ventil-Mittelachse schräg geneigt ist und eine maximale Tiefe von 2/10 bis 4/10 mm, eine axiale Länge von 9,5 - 13,5 mm sowie eine maximale Breite von 3 - 5 mm aufweist. Diese Abmessungen sind auf die weiter unten angegebene bevorzugte Verwendung des Schiebeventiles abgestellt.

Besonders zweckmäßig und vorteilhaft ist es noch, wenn die den Dichtungsmitteln zugewandten Randkanten der Aussparung poliert sind. Durch die polierten Randkanten werden die Dichtungsmittel in einem verringerten Ausmaß beansprucht.

Besonders zweckmäßig und vorteilhaft ist es ebenso, wenn das von der Aussparung zu passierende Dichtungsmittel von einem O-Ring gebildet ist. Dieser O-Ring, der unter Zusammendrückung und Vorspannung eingesetzt ist, nimmt die Beanspruchungen durch das Verschieben der Aussparung in verbesserter Weise auf.

Besonders zweckmäßig und vorteilhaft ist es weiterhin, wenn die umfangsmäßige Stellung der Aussparung mittels eines radialen Ineinandergriffes von Ventilgehäuse und Kolbenschieber gesichert ist. Die umfangsmäßig richtige Zuordnung der abfuhrseitigen Durchlaßöffnung zur zufuhrseitigen Durchlaßöffnung kann nicht in unerwünschter Weise verlorengehen.

Es ist möglich, den Schieber-Kanal in Achsrichtung aus dem Kolbenschieber herauszuführen. Besonders zweckmäßig und vorteilhaft ist es jedoch, wenn der Schieber-Kanal bei Offenstellung des Kolbenschiebers in einer vom Kolbenschieber begrenzten Höhlung des Ventilgehäuses endet, von der ein im Ventilgehäuse vorgesehener weiterer Kanal zum zweiten Anschluß führt. Dies verbessert und erleichtert den Abfluß oder Zufluß von Fluidum von dem bzw. zu dem Schieber-Kanal.

Besonders zweckmäßig und vorteilhaft ist es dabei, wenn die Ausnehmung bei der verbindenden Stellung ein umlaufendes Dichtungsmittel passiert. Die Ausnehmung, die z.B. polierte Randkanten besitzt, beeinträchtigt im Hinblick auf die Hin- und Herbewegung des Kolbenschiebers auch bei sehr häufiger Benutzung des Schiebeventiles das Dichtungsmittel nicht, insbesondere wenn das Dichtungsmittel ein unter Spannung, zusammengedrückt eingebauter O-Ring ist.

Das hier beschriebene erfindungsgemäße Schiebeventil läßt sich an sich überall dort anwenden, wo eine fein dosierbare Mengenregulierung eines Fluidums erfolgt. Besonders zweckmäßig und vorteilhaft ist jedoch die Anwendung des Schiebeventiles zur Steuerung der Stellung eines federbeaufschlagten Geräteteiles mittels Gas erhöhten Druckes. Es läßt sich die Stellung des Geräteteiles sehr feinfühlig zwischen zwei Endstellungen verändern. Dies erfolgt nicht etwa durch ein mit Membran versehenes Druckminderventil, das bei vertretbarem Aufwand nicht dauerhaft haltbar genug ist. Durch geringfügiges Verschieben des Kolbenschiebers läßt sich die Stellung des Geräteteiles geringfügig verändern.

Die Erfindung besteht auch darin, daß das im Vorhergehenden beschriebene erfindungsgemäße Schiebeventil zur Steuerung der Stellung einer federbeaufschlagten Drosselklappe einer Staudruck-Auspuffmotorbremse angewendet wird. Derartige Staudruck-Auspuffmotorbremsen sind an sich bekannt (DE-OS 34 30 028, 35 33 393), werden bisher so betätigt, daß die Drosselklappe entweder voll geschlossen oder voll geöffnet ist, und lassen sich aufgrund der Erfindung so betätigen, daß die Drosselklappe auf jede Stellung zwischen voll geschlossen und voll geöffnet einstellbar ist.

Bei Staudruck-Auspuffmotorbremsen ist die zu steuernde Druckluft nicht gereinigt, so daß enge Durchlässe verstopfen können. Eine feinfühlige Regulierung der Drosselklappenstellung mittels Membran aufweisender Druckminderventile erweist sich bei Dauerversuchen als unbrauchbar. Bekannte (DE-AS 23 24 187, 17 25 040) Mengenregulierventile sind wegen mangelnder Verstellfeinheit im Zusammenhang mit Staudruck-Auspuffmotorbremsen unbrauchbar. Eine Drosselklappe, die nur voll geöffnet oder voll geschlossen wird, ist bei Straßenglätte gefährlich. Daher werden Staudruck-Auspuffmotorbremsen bisher bei Straßenglätte nicht benutzt. Aufgrund der Erfindung läßt sich die Drosselklappe in dosierter Weise, d.h. gefühlvoll betätigen bzw. schließen. Der LKW-Fahrer kann mittels verschieden starken Durchtretens eines Pedales die Drosselklappe in verschieden weit schließende Stellungen bringen. Die Luftmengenregulierung erfolgt z.B. mittels einer Anschrägung am steuernden Kolbenschieber, die zu einem Durchbruch führt und laufend das Dichtungsmittel hin- und herpassiert. Durch verschieden weites Schließen der Drosselklappe werden verschiedene Bremskräfte eingestellt.

In der Zeichnung ist eine bevorzugte Ausführungsform der Erfindung dargestellt und zeigt
- Fig. 1: einen Schnitt eines Schiebeventiles mit Mengenregulierung, bei Offenstellung des Schiebeventiles,
- Fig. 2: eine Draufsicht auf eine Einzelheit des Schiebeventiles gemäß Fig. 1,
- Fig. 3: eine Seitenansicht einer Staudruck-Auspuffmotorbremse, zu betätigen mittels des Schiebeventiles gemäß Fig. 1,
- Fig. 4: das Schiebeventil gemäß Fig. 1 bei einer Sperrstellung, und
- Fig. 5: das Schiebeventil gemäß Fig. 1 bei einer Auslaßstellung.

Das Schiebeventil gemäß Zeichnung besitzt ein aus drei Gehäuseteilen zusammengeschraubtes Ventilgehäuse 1, das eine sich axial erstreckende längliche Gehäusekammer 2 aufweist, deren Querschnitt sich über die Länge ändert. In der Gehäusekammer 2 ist ein länglicher Kolbenschieber 3 eingepaßt hin- und herverschiebbar, der an einem Ende von einer Druckfeder 4 beaufschlagt ist, wobei der Raum der Gehäusekammer 2, in dem die Druckfeder 4 angeordnet ist, über eine Schnüffelbohrung 5 mit der Außenathmosphäre verbunden ist. Ein oberes Endstück 6 des Kolbenschiebers ragt nach oben aus dem Ventilgehäuse 1 heraus und läßt sich mittels eines Betätigungsgliedes gegen die Kraft der Druckfeder 4 mehr oder weniger weit in das Ventilgehäuse 1 schieben.

Das Ventilgehäuse 1 ist mit einem Gehäuse-Kanal 7 versehen, dem über einen ersten Anschluß 8 gemäß Pfeil Druckluft zugeführt wird, der in die Gehäusekammer 2 mit einer Durchlaßöffnung mündet und der über die Länge gleichbleibenden Querschnitt aufweist. Gegenüber dem erstgenannten Gehäuse-Kanal 7 in Richtung der Mittelachse 9 versetzt, ist das Ventilgehäuse 1 mit einem weiteren Kanal 10 versehen, der in die Gehäusekammer 2 mündet, über die Länge gleichbleibenden Querschnitt aufweist und über einen zweiten Anschluß 11 gemäß Pfeil Druckluft abgibt. Die Gehäusekammer 2 bildet in dem Bereich, von dem der weitere Kanal 10 ausgeht, eine im Durchmesser erweiterte, den Schieberkolben 3 umschließende Höhlung 12.

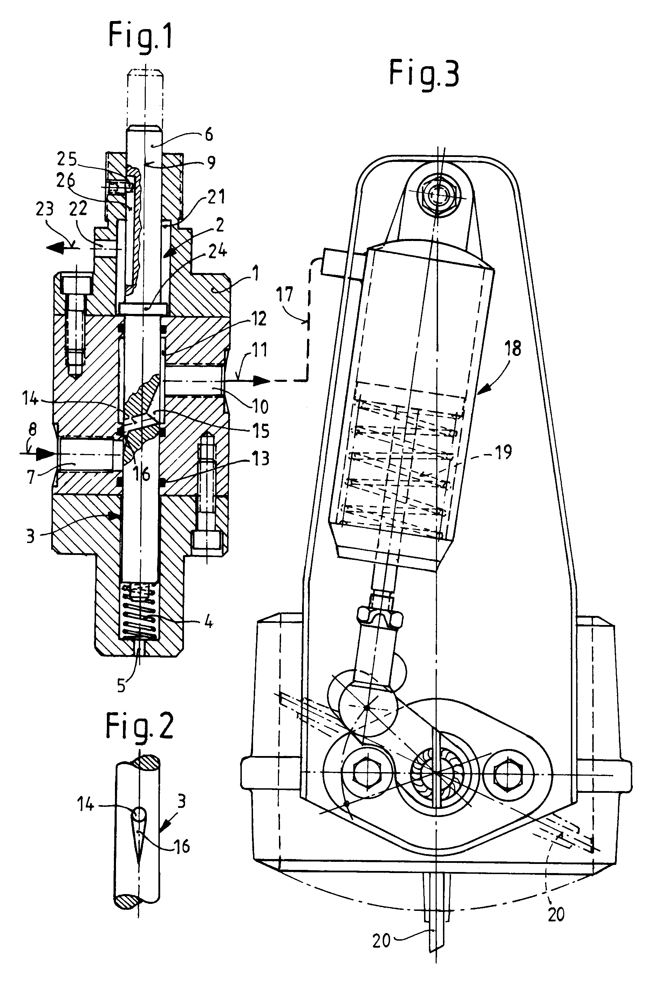

Der Schieberkolben 3 weist über seine Länge im wesentlichen gleichbleibenden Durchmesser auf und ist beiderseits des Gehäuse-Kanales 7 von je einem Dichtungsmittel 13 umfaßt, das in einer umlaufenden Nut des Ventilgehäuses 1 angeordnet ist. Nahe bei dem einen Dichtungsmittel beginnt die Höhlung 12, nahe deren anderem Ende ist ein weiteres, den Schieberkolben 3 umfassendes Dichtungsmittel 13 vorgesehen, das in einer umlaufenden Nut des Ventilgehäuses 1 angeordnet ist. Durch den Kolbenschieber 3 hindurch erstreckt sich ein zur Mittelachse 9 schräg angeordneter bohrungsartiger Schieber-Kanal 14, der auf der dem weiteren Kanal 10 zugeordneten Seite eine Erweiterung 15 bildet, die eine eckige, sich in Achsrichtung erstreckende Kerbe darstellt, die eine gegenüber dem Kanal 10 vergrößerte axiale Erstreckung aufweist. Auf der dem Gehäuse-Kanal 7 zugeordneten Seite ist am Kolbenschieber 3 eine flache Aussparung 16 vorgesehen, deren Querschnitt sich in Richtung weg von dem Schieber-Kanal 14 verjüngt, die auch in Fig. 2 gezeigt ist und die zusammen mit dem Schieber-Kanal eine Durchlaßöffnung bildet. Bei der in Fig. 1 gezeigten Offenstellung strömt Druckluft über den ersten Anschluß 8, den Gehäuse-Kanal 7, die Aussparung 16, den Schieber-Kanal 14, die Erweiterung 15, die Höhlung 12 und den weiteren Kanal 10 zum zweiten Anschluß 11.

An den zweiten Anschluß 11 ist eine Verbindungsleitung 17 angeschlossen, die zu einer Kolben-Zylinder-Einrichtung 18 einer Staudruck-Auspuffmotorbremse gemäß Fig. 2 führt. Die Druckluft betätigt in dem Zylinder einen Kolben, der andererseits von einer Feder 19 beaufschlagt ist, der bei seiner Bewegung über ein Gestänge eine Drosselklappe 20 verdreht. Je mehr Druckluft in den Zylinder gedrückt wird, desto stärker wird die Drosselklappe 20 geschlossen, die von der Feder 19 in die Offenstellung gedrängt wird. Bei der in Fig. 1 gezeigten Offenstellung passiert die Aussparung 16 das mittlere Dichtungsmittel 13, ohne von diesem geschlossen zu werden.

Nahe bei dem oberen Dichtungsmittel 13 beginnt eine weitere den Kolbenschieber 3 umschließende Höhlung 21 der Gehäusekammer, die über einen Kanal 22 im Ventilgehäuse 1 in einen Auslaß 23 gemäß Pfeil übergeht. Im Bereich dieser Höhlung 21 trägt der Kolbenschieber 3 einen Anschlag 24, der die Bewegung des Kolbenschiebers in beiden Richtungen begrenzt. Zwischen der Höhlung 21 und dem Endstück 6 ist am Ventilgehäuse 1 ein Fortsatz 25 vorgesehen, der in eine axial verlaufende Nut 26 des Kolbenschiebers 3 ragt und dessen Drehung verhindert.

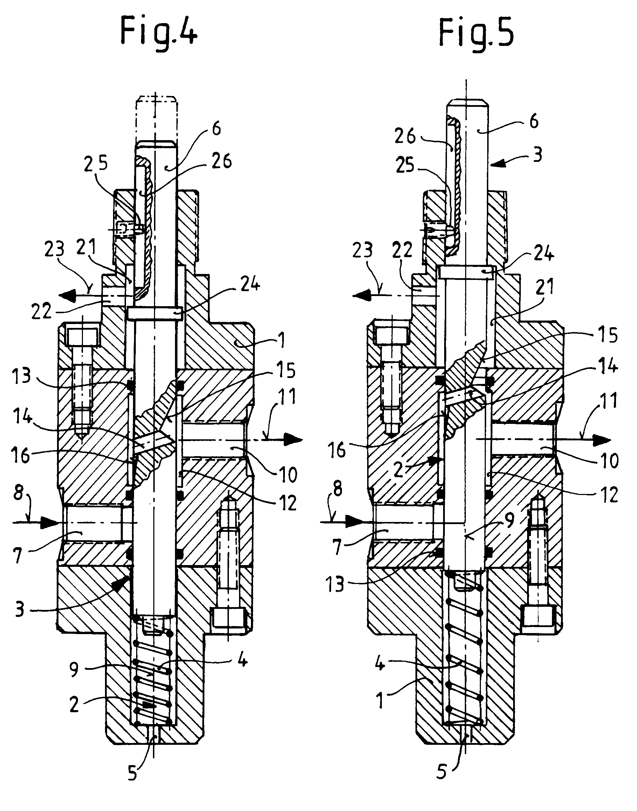

Fig. 4 zeigt das Schiebeventil bei voller Sperrstellung mit einer mittleren Stellung des Ventilschiebers 3. Der Schieber-Kanal 14 samt Aussparung 16 und Erweiterung 15 ist zwischen dem mittleren Dichtungsmittel 13 und dem oberen Dichtungsmittel angeordnet, so daß über den Anschluß 8 keine Druckluft einströmen kann, über den Anschluß 11 keine Druckluft abströmen oder zurückströmen kann und über den Auslaß 23 keine Druckluft entweichen kann.

Fig. 5 zeigt das Schiebeventil bei einer Entlastungsstellung mit einer von der Druckfeder 4 bestimmten unbetätigten Stellung des Ventilschiebers 3. Die Aussparung 16 samt zugehörigem Ende des Schieber-Kanales 14 ist zwischen dem mittleren und dem oberen Dichtungsmittel 13 angeordnet, so daß über den Anschluß keine Druckluft zuströmen kann. Die Erweiterung 15 des Schieber-Kanales 14 erstreckt sich durch das obere Dichtungsmittel 13 und verbindet die beiden Höhlungen 16, 21, so daß Druckluft über den Anschluß und den Auslaß 23 verdrängt werden kann, wenn in Fig. 3 die Drosselklappe 20 sich aufgrund der Feder 19 in ihre Offenstellung bewegt.

## Patentansprüche

1. Schiebeventil mit Mengenregulierung für ein Fluidum, bei dem ein Kolbenschieber (3) in einer Gehäusekammer (2) eines Ventilgehäuses (1) axial hin- und herverschiebbar ist und aus dem Ventilgehäuse (1) mit einem Betätigungsendstück (6) herausragt,
bei dem im Ventilgehäuse (1) ein mit einem ersten Anschluß (8) in Verbindung stehender Gehäuse-Kanal (7) mit einer dem Kolbenschieber (3) zugewandten Durchlaßöffnung vorgesehen ist,
bei dem im Kolbenschieber (3) ein mit einem zweiten Anschluß (11) in Verbindung stehender Schieber-Kanal (14) mit einer dem Ventilgehäuse (1) zugewandten Durchlaßöffnung vorgesehen ist, wobei das Fluidum durch den einen Kanal (7) den Durchlaßöffnungen zuführbar und durch den anderen Kanal (14) von den Durchlaßöffnungen abführbar ist und
bei dem in Achsrichtung gesehen, beiderseits der zufuhrseitigen Durchlaßöffnung jeweils ein umlaufendes Dichtungsmittel (13) vorgesehen ist,
dadurch gekennzeichnet,
daß die Durchlaßöffnung des abführenden Kanals (14) sich über eine vom zugeordneten Kanal (14) ausgehende Aussparung (16) erstreckt, deren Querschnitt sich bei Sperrstellung des Kolbenschiebers (3) in axialer Richtung zur zufuhrseitigen Durchlaßöffnung hin verjüngt, und
daß der Schieber-Kanal (14) auf der dem zweiten Anschluß (11) zugeordneten Seite in eine Ablaß-Ausnehmung (15) des Kolbenschiebers (3) übergeht, über welche der zweite Anschluß (11) bei einer Kolbenschieber-Sperrstellung für den Durchtritt zwischen den beiden Anschlüssen (8, 11) mit einem Ablaß (23) in Verbindung steht,
wobei die Ablaß-Ausnehmung (15) und die Kanal-Aussparung (16) in axialer Richtung gegeneinander versetzt sind, wobei der erste Anschluß (8), der zweite Anschluß (11) und der Ablaß (23) in axialer Richtung gegeneinander versetzt sind, und wobei bei der Kolbenschieber-Sperrstellung die Durchtrittssperrung zwischen den beiden Anschlüssen (8, 11) und die Verbindung zwischen dem zweiten Anschluß (11) und dem Ablaß (23) aufgrund der axialen Erstreckung der Ablaß-Ausnehmung (15) und der jeweiligen axialen Versetzungen gegeben sind.

2. Schiebeventil nach Anspruch 1, **dadurch gekennzeichnet,** daß die dem abfuhrseitigen Kanal (14) zugeordnete Aussparung (16) am Kolbenschieber (3) vorgesehen ist.

3. Schiebeventil nach Anspruch 1 oder 2, **dadurch gekennzeichnet,** daß der abfuhrseitige Kanal (14) ein einheitliches Höhlungsgebilde ist und ebenso wie die Aussparung (16) auf einen Teil eines Umfanges um die Ventil-Mittelachse (9) beschränkt ist.

4. Schiebeventil nach Anspruch 1, 2 oder 3, wobei der abfuhrseitige Kanal eine Bohrung umfaßt**, dadurch gekennzeichnet,** daß die umfangsmäßige Breite der Aussparung (16) gleich oder kleiner als die umfangsmäßige Breite der Bohrung (14) ist.

5. Schiebeventil nach Anspruch 4, **dadurch gekennzeichnet,** daß der Grund der Aussparung (16) plan ist, zur Ventil-Mittelachse (9) schräg angeordnet ist und sich in axialer Richtung in der Breite verjüngt.

6. Schiebeventil nach Anspruch 5**, dadurch gekennzeichnet,** daß die Aussparung (16) mit dem Grund unter einem Winkel von 1° bis 2° zur Ventil-Mittelachse schräg geneigt ist und eine maximale Tiefe von 2/10 bis 4/10 mm, eine axiale Länge von 9,5 - 13,5 mm sowie eine maximale Breite von 3 - 5 mm aufweist.

7. Schiebeventil nach einem der vorhergehenden Ansprüche, **dadurch gekennzeichnet**, daß die den Dichtungsmitteln (13) zugewandten Randkanten der Aussparung (16) poliert sind.

8. Schiebeventil nach einem der vorhergehenden Ansprüche, **dadurch gekennzeichnet**, daß das von der Aussparung (16) zu passierende Dichtungsmittel (13) von einem O-Ring gebildet ist.

9. Schiebeventil nach einem der vorhergehenden Ansprüche, **dadurch gekennzeichnet,** daß die umfangsmäßige Stellung der Aussparung (16) mittels eines radialen Ineinandergriffes (25, 26) von Ventilgehäuse und Kolbenschieber (3) gesichert ist.

10. Schiebeventil nach einem der vorhergehenden Ansprüche, **dadurch gekennzeichnet,** daß der Schieber-Kanal (14) bei Offenstellung (Fig. 1) des Kolbenschiebers in einer vom Kolbenschieber (3) begrenzten Höhlung (12) des Ventilgehäuses (1) endet, von der ein im Ventilgehäuse (1) vorgesehener weiterer Kanal (10) zum zweiten Anschluß (11) führt.

11. Schiebeventil nach einem der vorhergehenden Ansprüche, **dadurch gekennzeichnet,** daß die Ausnehmung (15) bei der verbindenden Stellung ein umlaufendes Dichtungsmittel (13) passiert.

12. Anwendung des Schiebeventils gemäß einem der vorhergehenden Ansprüche zur Steuerung der Stellung eines federbeaufschlagten Geräteteiles mittels Gas erhöhten Druckes.

13. Anwendung nach Anspruch 12, **dadurch gekennzeichnet,** daß das Geräteteil die Drosselklappe (20) einer Staudruck-Auspuffmotorbremse ist.

## Claims

1. A slide valve with volume regulation for a fluid, wherein a piston slide valve (3) is axially displaceable in a reciprocating manner in a chamber (2) of a valve housing (1) and projects out of the valve housing (1) with an actuating end member (6);
wherein a housing duct (7) connected to a first attachment (8) and having a through opening facing the piston slide valve (3) is provided in the valve housing (1);
wherein a slide duct (14) connected to a second attachment (11) and having a through opening facing the valve housing (1) is provided in the piston slide valve (3), the fluid being suppliable to the through openings through one duct (7) and removable from the through openings through the other duct (14), and
wherein a continuous sealing means (13) is provided respectively on both sides of the supplying through opening as viewed in the axial direction,
**characterized in that** the through opening of the removal duct (14) extends over an opening (16) which starts from the associated duct (14) and the cross-section of which tapers inwards in the axial direction towards the supply through opening in the blocking position of the piston slide valve (3), and
the slide duct (14) on the side associated with the second attachment (11) passes into an outflow recess (15) in the piston slide valve (3), by way of which [recess (15)] the second attachment (11) is connected to an outflow (23) for the passage between the two attachments (8, 11) in a blocking position of the piston slide valve,
the outflow recess (15) and the duct opening (16) being offset with respect to each other in the axial direction, the first attachment (8), the second attachment (11) and the outflow (23) being offset with respect to one another in the axial direction, and the blocking of the passage between the two attachments (8, 11) and the connexion between the second attachment (11) and the outflow (23) being made in the blocking position of the piston slide valve as a result of the axial extension of the outflow recess (15) and the respective axial offsets.

2. A slide valve according to Claim 1, **characterized in that** the opening (16) associated with the removal duct (14) is provided on the piston slide valve (3).

3. A slide valve according to Claim 1 or 2, **characterized in that** the removal duct (14) is a uniform hollow structure and, like the opening (16), is restricted to part of a periphery about the median axis (9) of the valve.

4. A slide valve according to Claim 1, 2 or 3, wherein the removal duct is provided with a bore, **characterized in that** the peripheral width of the opening (16) is equal to or less than the peripheral width of the bore (14).

5. A slide valve according to Claim 4, **characterized in that** the base of the opening (16) is plane, is arranged obliquely with respect to the median axis (9) of the valve and tapers inwards in width in the axial direction.

6. A slide valve according to Claim 5**, characterized in that** the opening (16) is obliquely inclined with the base at an angle of from 1° to 2° to the median axis of the valve and has a maximum depth of from 2/10 to 4/10 mm, an axial length of from 9^{.}5 to 13^{.}5 mm and a maximum width of from 3 to 5 mm.

7. A slide valve according to one of the preceding Claims, **characterized in that** the marginal edges of the opening (16) facing the sealing means (13) are polished.

8. A slide valve according to one of the preceding Claims, **characterized in that** the sealing means (13) past which the opening (16) has to move is formed by an O-ring.

9. A slide valve according to one of the preceding Claims, **characterized in that** the peripheral setting of the opening (16) is fixed by means of a radial interlocking (25, 26) of the valve housing and the piston slide valve (3).

10. A slide valve according to one of the preceding Claims, **characterized in that** in the open position (Fig. 1) of the piston slide valve the slide duct (14) terminates in a hollow (12) in the valve housing (1) which [hollow (12)] is bounded by the piston slide valve (3) and from which a further duct (10) provided in the valve housing (1) leads to the second attachment (11).

11. A slide valve according to one of the preceding Claims, **characterized in that** in the connecting setting the opening (15) passes a continuous sealing means (13).

12. Use of the slide valve according to one of the preceding Claims for controlling the setting of a spring-loaded part of the device by means of gas at elevated pressure.

13. Use according to Claim 12, **characterized in that** the part of the device is the butterfly valve (20) of a dynamic-pressure exhaust engine brake.

## Revendications

1. Vanne à tiroir à débit réglable pour un fluide, dans le cas de laquelle un piston-tiroir (3) peut coulisser en va et vient dans le sens axial dans une chambre (2) d'un carter (1) de vanne et dépasse hors du carter (1) de la vanne par une extrémité de manoeuvre (6),
dans le cas de laquelle, dans le carter (1) de la vanne, est prévu un canal de carter (7) qui est en liaison avec un premier raccord (8) et présente une ouverture de passage orientée vers le piston-tiroir (3),
dans le cas de laquelle, dans le piston-tiroir (3), est prévu un canal de tiroir (14) qui est en liaison avec un second raccord (11) et présente une ouverture de passage orientée vers le carter (1) de la vanne, étant précisé que le fluide peut être amené aux ouvertures de passage par le premier canal (7) et transporté depuis les ouvertures de passage par l'autre canal (14) et
dans le cas de laquelle, de chacun des deux côtés de l'ouverture de passage située du côté de l'entrée, vu selon la direction axiale, est prévue une garniture d'étanchéité périphérique (13),
vanne caractérisée,
par le fait que l'ouverture du passage du canal de transport (14) s'étend sur un évidement (6) qui part du canal correspondant (14) et dont, en position de verrouillage du piston-tiroir (3), la section va en diminuant, selon la direction axiale, en direction de l'ouverture de passage située du côté de l'entrée,
par le fait que, du côté correspondant au second raccord (11), le canal du tiroir (14) se transforme en un évidement de sortie (15) du piston-tiroir (3) par l'intermédiaire duquel, en position de verrouillage du passage entre les deux raccords (8,11) du piston-tiroir, le second raccord (11) est en liaison avec une sortie (23),
dans le cas de laquelle l'évidement de sortie (15) et l'évidement du canal (16) sont décalés l'un par rapport à l'autre selon la direction axiale, étant précisé que le premier raccord (8), le second raccord (11) et la sortie (23) sont décalés l'un par rapport à l'autre selon la direction axiale, et étant précisé que, en position de verrouillage du piston-tiroir, on obtient le verrouillage du passage entre les deux raccords (8,11) et la liaison entre le second raccord (11) et la sortie (23) du fait de l'extension axiale de l'évidement de sortie (15) et des décalages respectifs selon la direction axiale.

2. Vanne à tiroir selon la revendication 1, caractérisée par le fait que l'évidement (16) correspondant au canal de transport (14) est prévu sur le piston-tiroir (3).

3. Vanne à tiroir selon la revendication 1 ou 2, caractérisée par le fait que le canal de transport (14) a la structure d'un logement homogène et que, comme l'évidement (16), il est limité à une partie d'une périphérie autour de l'axe médian (9) de la vanne.

4. Vanne à tiroir selon la revendication 1, 2 ou 3, dans laquelle le canal de transport est constitué d'un perçage, caractérisée par le fait que la largeur de l'évidement (16) mesurée sur la périphérie, est égale ou inférieure à la largeur du perçage (14) mesurée sur la périphérie.

5. Vanne à tiroir selon la revendication 4, caractérisée par le fait que le fond de l'évidement (16) est plan, est disposé obliquement par rapport à l'axe médian (9) de la vanne et va en diminuant en largeur selon la direction axiale.

6. Vanne à tiroir selon la revendication 5, caractérisée par le fait que l'évidement (16) a son fond incliné obliquement d'un angle de 1° à 2° par rapport à l'axe médian de la vanne et présente une profondeur maximale de 2/10 à 4/10 mm, une longueur axiale de 9,5-13,5 mm ainsi qu'une largeur maximale de 3 - 5 mm.

7. Vanne à tiroir selon l'une des revendications précédentes, caractérisée par le fait que les arêtes de bordure de l'évidement (16) orientées vers les garnitures d'étanchéité (13) sont polies.

8. Vanne à tiroir selon l'une des revendications précédentes, caractérisée par le fait que la garniture d'étanchéité (13) que doit franchir l'évidement (16) est formée d'un joint torique.

9. Vanne à tiroir selon l'une des revendications précédentes, caractérisée par le fait que la position de l'évidement (16), mesurée sur la périphérie, est assurée au moyen d'une venue mutuelle en prise radiale (25,26) du carter de la vanne et du piston-tiroir (3).

10. Vanne à tiroir selon l'une des revendications précédentes, caractérisée par le fait qu'en position d'ouverture (figure 1) du piston-tiroir, le canal du tiroir (14) se termine dans un logement (12) du carter (1) de la vanne qui est limité par le piston-tiroir (3) et d'où un autre canal (10), prévu dans le carter (1) de la vanne, conduit au second raccord (11).

11. Vanne à tiroir selon l'une des revendications précédentes, caractérisée par le fait qu'en position de liaison, l'évidement (15) franchit une garniture d'étanchéité périphérique (13).

12. Application de la vanne à tiroir selon l'une des revendications précédentes pour piloter la position d'un appareil, contraint par ressort, au moyen d'un gaz de pression élevée.

13. Application selon la reendication 12, caractérisée par le fait que l'appareil est le volet d'étranglement (20) d'un frein assisté sur l'échappement à pression cinétique.
